(19) **Europäisches Patentamt / European Patent Office / Office européen des brevets**

(11) **EP 1 591 499 B1**

(12) **EUROPEAN PATENT SPECIFICATION**

(45) Date of publication and mention of the grant of the patent:
**12.09.2007 Bulletin 2007/37**

(51) Int Cl.:
**C09D 11/18** [(2006.01)]

(21) Application number: **05252562.3**

(22) Date of filing: **25.04.2005**

(54) **Aqueous Ink for ball-point pen using oil-in-water type resin emulsion and ball-point pen using the aqueous ink**

Wässrige Tinte für einen Kugelschreiber mit einer öl-in-Wasser Emulsion und Kugelschreiber mit dieser wässrigen Tinte

Composition d'encre aqueuse pour stylo à bille avec une emulsion eau-dans-huile et stylo à bille utilisant cette encre aqueuse

(84) Designated Contracting States:
**DE FR GB IT**

(30) Priority: **26.04.2004 JP 2004129311**

(43) Date of publication of application:
**02.11.2005 Bulletin 2005/44**

(73) Proprietor: **Kabushiki Kaisha Pilot Corporation Tokyo (JP)**

(72) Inventor: **Ohno, Takashi, c/o K.K. Pilot Corporation Isesaki-shi, Gunma (JP)**

(74) Representative: **Hayes, Adrian Chetwynd et al Boult Wade Tennant, Verulam Gardens 70 Gray's Inn Road London WC1X 8BT (GB)**

(56) References cited:
**EP-A- 1 258 511**     **EP-A- 1 462 495**
**US-A- 5 837 753**      **US-A- 5 969 004**
**US-A1- 2003 213 402**

**Description**

The present invention relates to ink using oil-in-water type resin emulsion for aqueous ballpoint pens and to aqueous ballpoint pens using such ink therefor.

Ballpoint pens are well known, which are provided, respectively, with a ballpoint pen chip at an extreme end of an ink cartridge to encase and to freely rotatably hold a ball as a writing tool capable of writing on a permeable sheet such as a paper.

Meanwhile, marking pens are also generally known, each being provided with, at the tip of the pen, a fibrous bunch capable of writing on the surface of impermeable substance such as a metal, a glass, a plastic and so forth. The marking pens are classified into two typical types, one being an aqueous type which uses water-soluble solvent, and the other being an oil-based type which uses oil-based solvent. Both of such types are widely used for writing with thick letters or writing on the above-mentioned impermeable surface. However, marking pens of those types involves two large problems described below.

The first problem is that the writing tip is apt to be damaged or deformed as the tip being made of fibrous bunch. When the writing tip is made of fibrous bunch, the writing tip is to come in face-to-face contact with a written surface, thus allowing thick-letter writing. Also, an ample amount of ink can be applied to an impermeable surface upon writing, for the reason that writing is not performed by rolling of ball as the case of a conventional ballpoint pen. Nevertheless, the writing tip of the fibrous bunch is apt to be damaged or deformed while writing. Therefore, it cannot be guaranteed that a given thickness in writing is kept for a long time of use. Particularly, compared with a paper, in case of writing on such impermeable surface as hard a metal, a glass or a plastic material, the writing tip made of fibrous bunch is liable to be deformed.

The second problem is in that the marking pen becomes readily unable to write while it is left uncapped even for a short while, due to the use of volatile ink. As described above, the marking pen employs the writing tip made of fibrous bunch, it is understood that the marking pen is inherently designed to allow a massive amount of ink to bleed from the writing tip in comparison with the usual ballpoint pen, for the purpose of realizing thick-letter writing or better writing on impermeable surface. Thus, the feature of the marking pen resides in that drying ability in the written print, the problem of smearing as well as bleed-through are appropriately taken care of by the use of the volatile ink. On the other hand, the ink kept by absorbing within the fibrous bunch in the writing tip is exposed to air while causing rapid increase of viscosity or solidification, due to the drying up and accordingly, the writing becomes rejectable.

Although there has been proposed recent inventions which contrive prolonging of the life of a fibrous bunch by the application of surface treatment to the fibrous bunch, there still remains a problem such that an extremely careful attention must be paid to the viscosity control of ink, while taking account of the fact that the ink flows through the entire passage by capillary action from the ink holder to the fibrous bunch in the tip of pen of the marking pen.

Therefore, although the marking pens have been in wide use, the construction thereof per se that might exhibit an appropriate writing operation must also unavoidably suffer from inherent defects and hence, the marking pens results in imposing restrictions on further extensive use.

To solve the described problems encountered by the marking pens, various attempts have been made in which the writing tip of the marking pen is devised to be formed not with the conventional fibrous bunch but with a ballpoint pen chip made of metallic or plastic materials as employed by a ball point pen. However, changing of the writing tip from the construction of the conventional marking pen to that as employed by the ballpoint pen while adopting the writing tip made of either a metal or a resin material has shown difficulty in completely solving the above-mentioned problems, and has caused new problems to be solved. Namely, on the surface of such impermeable material as those represented by a metal, a glass or a plastic, the resistance occurring at an internal surface of the ball-holding chip during writing is larger than the resistance occurring at the material surface on which the writing is carried out and hence, the ball cannot be rotated. When the described relation occurs with regard to the ball, a driving force for rotating the ball is insufficient and will result in failure in causing rotation of the ball. Insofar as the ball could not be rotated, the ink cannot bleed out from the tip of the pen and accordingly, the writing by the pen cannot satisfactorily be performed.

Further, there is, for example, "A Ballpoint Pen for Writing on Cloth" disclosed in Japanese Unexamined Patent Publication (Kokai) No. 2003-291579, which refers to a ballpoint pen using aqueous ink composition including pigment. Nevertheless, in the disclosed case, since an ink viscosity is as high as 100 through 30,000 mPa•s (at 25°C), a film of the ink cannot be rapidly formed on the surface of the ball, resulting in an unfavorable writing on smooth impermeable surface, though writing on a permeable surface such as cloth can be well achieved.

In addition, there are, for example, Japanese Unexamined Patent Publication (Kokai) No.2002-36775 entitled "Ballpoint Pen" and Japanese Unexamined Patent Publication (Kokai) No. 2002-226760 entitled "Ballpoint Pen" both refer to an ink of ballpoint pen for writing on smooth impermeable surface. However, in both cases, the ink employs dyestuff, which lacks hiding power and accordingly, there is a problem of little durability to sun-exposure.

In view of the above problems, an object of the present invention is to provide an ink for aqueous ballpoint pen using oil-in-water type resin emulsion, which can realize satisfactory writing on a smooth impermeable surface of a metal, a glass, a plastic material and so on with excellent written mark fixation, drying property, water-resistance, and which can be free from smearing or straight through while preventing dry-up of the ink at the tip of the pen, and also to provide an aqueous ballpoint pen using the ink.

In accordance with the present invention, an ink for aqueous ballpoint pen, using an oil-in-water type resin emulsion, comprises a solvent of water and alcohol-based solvent of 0.5 to 10 kPa in vapor pressure at 20°C; a pigment; a water-soluble resin; and, an oil-in-water type resin emulsion, wherein an aggregate concentration of solid contents of said water-soluble resin and said oil-in-water type resin emulsion is 5.0 to 30.0 mass% against total quantity of the ink composition, and wherein viscosity of the ink falls within the range of 5 to 30 mPa•s at 20°C,

wherein the oil-in-water type resin emulsion is in the range of 1.0 to 20.0 mass% in terms of solid content against the total quantity of the ink composition, and

wherein the water-soluble resin is in the range of 1.0 to 20.0 mass% against the total quantity of the ink composition.

The oil-in-water type resin emulsion may be an acrylic-based emulsion.

The lowest film-forming temperature of the acrylic-based emulsion may be equal to or below 25°C.

The water-soluble resin may be an acrylic-based resin.

The acrylic-based resin may be 5,000 through 20,000 in molecular weight, 40 through 150°C in glass-transition temperature and 50 through 250 in acid value.

An aqueous ballpoint pen, using oil-in-water type resin emulsion, and including an ink-container tube having an end thereof to which a tip of ballpoint pen freely rotatably holding a ball is directly or through a tip-holder connected, wherein an aqueous ink for ballpoint pen using the oil-in-water type resin emulsion described above may be filled in the ink-container tube.

The ballpoint pen comprises a valve mechanism which, when said pen is not in use, allows the ball rotatably held in the tip of the ballpoint pen, to be pressed against an inner wall of an edge of said tip due to a coil spring abutted directly or through a pusher-article against a rear face of said ball and, when said pen is in use, allows the ink to flow through a gap provided between the inner wall of the edge of said tip and the ball for writing with pressure, by valve mechanism.

The tip of the ballpoint pen is made of stainless steel substance and a surface roughness of said ball is equal to or less than 5 nm in terms of arithmetic average value of a surface roughness (Ra).

The present invention has succeeded to provide an aqueous ink composition, which is capable of realizing a writing on a smooth impermeable surface of substances such as a metal, a glass, a plastic and so forth, irrespective of the surface condition, exhibiting excellent properties in fixing and drying of the writing on such surface and, further preventing smear or bleeding-through during the writing on a paper, while inhibiting dry-up of the ink at a tip of a writing part of a pen. The present invention has also succeeded to provide an aqueous ballpoint pen using the above-mentioned aqueous ink.

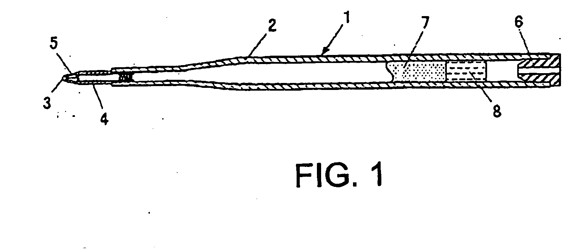

Fig.1 is a drawing of longitudinal section showing the aqueous ballpoint pen of the present invention.

The present invention has enabled the object to achieve writing with ballpoint pen successfully on smooth impermeable surface of a substance such as a metal, a glass, a plastic material and so forth.

Viscosity of ink according to the present invention was measured at 12rpm revolution speed of BL rotor, at 20°C of environment, using viscometer, Model B8M manufactured by TOKIMEC Inc. in Tokyo.

The first characterized point of the present invention resides in that viscosity of ink is set to be 5 through 30 mPa•s at 20°C of measuring environment. In case of writing on an impermeable surface, the writing surface is often extremely smooth and accordingly, a sufficient driving force attempting to rotate the ball is difficult to occur at the tip. As a result of careful study by the inventor, it has been found that a quick formation of an ink film over the ball surface results in obtaining a condition for enabling the ball to rotate even on a smoothened surface of writing. This is considered as being due to such an interactive phenomena that the resistance against ball rotation is reduced by increased lubrication with ink filled around the seat on which the ball is received, and the migration of viscous ink onto the smooth writing surface may cause formation of a wet environment for the rotation of the ball.

If viscosity of the ink is less than 5mPa•s at 20°C of measuring environment, writing on paper can not prevent ink from smearing or bleeding through toward the back of the paper, though writing on a smooth impermeable surface might perform satisfactorily. Likewise, if viscosity of the ink is more than 30mPa•s, writing on a smooth impermeable surface cannot perform satisfactorily, since the ink cannot quickly form any film over the ball surface.

The second characterized point of the present invention resides in that pigment is used as a coloring agent. Pigment is excellent in adaptivity to give a marking with high hiding power. Further, compared with dyestuff, the pigment is provided with longer durability against sunlight exposure, hence more preferable for outdoor use. Ink made in such composition forms an instantly dried film in the minute gap between ball surface and ball-holder at the tip of pen, so that drying-up of the ink will not proceed further toward inner area of the tip. In case of the fibrous bunch at the tip of pen, the dry film forming character of pigment often blocks capillary action, causing a serious problem for ink distribution. On the other hand, in case of the ballpoint pen, where tip part is made of a metal or a resin material, if drying-up proceeds further toward inner area of the tip, writing defect will occur.

In view of the above, the present invention is directed to most effective prevention of occurrence of the writing defect concerned with drying-up of ink, by employing tip of ballpoint pen made of a metallic or resin material, in combination with use of the ink which readily forms dry film. By controlling the viscosity of the ink in the above-described manner, excellent quality of writing can be achieved. While dried film forming within the gap at the tip may be made by preparing the ink composition with proper resin component, the most effective result can be obtained by the use of pigment as essential ingredient of coloring agent, resulting with excellent quality of writing and solving the problem in drying-up of the ink. Pigment may be of organic, inorganic, or formulated pigment, for example, carbon black, phthalocyanine compound, azo compound, quinacridone compound, quinophthalone compound, threne compound, triphenylmethane compound, etc. The pigment may be used either in a single compound or in combination of two or more compounds. Dosage of pigment in formulation is to be 1 through 10mass% against total quantity of ink composition. When dosage of pigment is less than 1 mass%, results are weak coloring and slow forming of dried film. When dosage of pigment is more than 10 mass%, viscosity of ink increases so that it becomes difficult to limit ink viscosity at 20˚C within 5 through 30mPa•s.

The third characterized point of the present invention resides in that a water-soluble resin and an oil-in-water type resin emulsion are used together as a fixation agent of written mark, and the aggregate solid content of the water-soluble resin and the oil-in-water type resin emulsion is kept in the range of 5.0 through 30.0mass% against total quantity of ink composition. While pigment forms film, as stated before, the use of the water-soluble resin and the oil-in-water type resin emulsion together is for improving adhesion and scratch resistance of written mark on a written surface. In this case, however, the most important matter to be considered is solid content concentration of the water-soluble resin and the oil-in-water type resin emulsion. This is because solid content of the water-soluble resin and the oil-in-water type resin emulsion exhibits an effective role to provide fixation of written mark onto a written surface after dry.

As stated above, the water-soluble resin and the oil-in-water type resin emulsion are used for the purpose of increasing the fixation of written mark by dry film. Nevertheless, if concentration of solid content in the ink composition is less than 5.0 mass%, written mark slowly dries to result in poor fixation of written mark on an impermeable surface, and if more than 30.0mass%, ink viscosity increases so that it is difficult to acquire viscosity of ink at 5 to 30mPa•s at 20˚C.

The more is dosage of water-soluble resin, the better is fixation of written mark. However, if dosage of water-soluble resin exceeds 20mass%, a tough dry film is formed at the tip part of a pen resulting in poor performance in initial writing, and also difficulty arises in acquiring the desired level of viscosity of ink (5 to 30mPa•s at 20˚C). Meanwhile, if dosage of water-soluble resin is less than 1.0 mass%, scratch resistance decreases and written mark fixation on an impermeable surface deteriorates. Therefore, dosage of water-soluble resin in total ink composition is preferably 1.0 through 20.0 mass%.

Applicable resin as water-soluble resin is designated to be acrylic resin, alkyd resin, cellulose derivative, polyvinyl pyrrolidone, polyvinyl-alcohol, etc., among which a single item or more than two items in combination may be used.

Also, as stated above, in accordance with the present invention, pigment is used as coloring agent. If a formulation of ink is provided with dispersing function and fixing performance for pigment, it will be the most efficient formulation for the ink which involves a limitation on viscosity. Applicable water-soluble resin for such need is typically represented by acrylic resin, which is excellent in pigment dispersing function and after-dry fixation. Further, of acrylic resin, preferably, molecular weight should be 5,000 through 20,000, glass-transition temperature should be 40 through 150˚C and acid value should be 50 through 250. As described above in detail, one of the key points of the present invention resides in that the ballpoint tip made of metal or resin materials is employed and volatile ink is employed, which causes the ink to form excellent dry film after it dries, while preventing the tip part from further drying. At the same time, such dry film improves fixation onto an impermeable surface. In case of acrylic resin, if molecular weight is less than 5,000, it is difficult to form satisfactory dry film and to have good fixation onto an impermeable surface. If molecular weight exceeds 20,000, initial writing performance deteriorates due to forming of excessively tough dry film at the tip part of a pen. Regarding glass-transition temperature, if it is lower than 40˚C, film to be formed after dry is excessively soft, hence resulting in poor drying of written mark on an impermeable surface. If glass transition temperature exceeds 150˚C, excessively hard film is formed after drying so that fixation of written mark deteriorates. Regarding acid value, if it is less than 50, water solubility decreases so that it is difficult to obtain a stable ink, and if it exceeds 250, compatibility with water increases excessively so that water resistance of written mark is liable to damage.

While water-soluble resin improves fixation performance of written mark, to further strengthen the fixation performance, oil-in-water type resin emulsion of such as acrylic, urethane, styrene-butadiene, polyester or vinyl-acetate, etc. are used together. The oil-in-water resin type emulsion, likewise as the water-soluble resin, improves fixation of written mark by drying of film and also improves water resistance of written mark. The oil-in-water type resin emulsion, compared with the water-soluble resin, is faster in dry film forming speed and higher in adhesion onto a written surface, hence resulting in highly tough fixation of written mark. Also, the oil-in-water type resin emulsion holds ink viscosity at minimal increase and does not dissolve into ink, being in a state of dispersion, hence not hampering evaporation of moisture. Therefore, its joint use with the water-soluble resin easily ensures excellent drying and fixing performances of written mark, desired ink-viscosity and other characteristics.

Such oil-in-water type resin emulsion, if formulated less than 1.0 mass% against total ink composition in terms of solid content, fixing performance and water-resistance of written mark do not improve significantly, and, if formulated exceeding 20.0 mass%, ink-viscosity easily increases so that it is difficult to prepare preferable viscosity (5 to 30mPa•s of ink-viscosity). Therefore, formulation of such oil-in-water type resin emulsion should preferably be in the range of 1.0 through 20.0 mass% against total quantity of ink composition.

Also, likewise with the water-soluble resin, if the oil-in-water type resin emulsion is provided with dispersing function and fixation performance of pigment, it will provide the most efficient formulation to formulate ink composition that involves limitation on viscosity. Applicable oil-in-water type resin emulsion is typically represented by acrylic-based emulsion, which is provided with pigment dispersing function and fixation performance after dry. It is further preferable to select appropriate grade of acrylic-based emulsion with the lowest film-forming temperature being lower than room temperature or preferably lower than 25°C, but more preferably lower than 15°C, so that the ink may form film in the environment that aqueous ballpoint pen is usually used for writing.

With writing tool equipped with fibrous bunch at the tip of a pen, it is not practicable to select film-forming water-soluble resin and oil-in-water type resin emulsion. It is to be understood that adoption of a ballpoint pen tip made of metal or resin material makes it practicable to do such selection.

The fourth characterized point of the present invention resides in the use of a solvent including water and alcohol-based solvent of vapor pressure at 20°C being 0.5 through 10kPa. Expected functions of the solvent by the present invention are maintained dispersion of pigment and control of volatility characteristics. The inventor of the present application has experimentally found that a combination of water and alcohol-based solvent of 0.5through 10 kPa•s vapor pressure at 20°C is most effective to satisfy both of those functions. If vapor pressure at 20°C is less than 0.5kPa, it cannot satisfy volatility characteristics, resulting in excessively slow drying performance of written mark. If vapor pressure at 20°C exceeds 10kPa, ink viscosity is liable to rise, because of the volatility being high, solvent content may decrease with time.

While the quantity of solvent, of which vapor pressure at 20°C is higher than 0.5kPa, may vary with kind of pigment selected or solid content of ink composition, a necessary quantity of alcohol-based solvent should preferably be 2.0 through 15.0 mass% against total quantity of ink composition. If it is less than 2.0 mass%, drying of written mark is slow and effective film-forming is delayed in the gap at the tip part, possibly causing deterioration of writing performance at the initial stage and drying-up of ink proceeding into inner part, even if aggregate solid content of water-soluble resin and oil-in-water type resin emulsion be in the range of 0.5 through 30.0mass% against total quantity of ink composition.

If it exceeds 15.0 mass%, dispersion stability of pigment may deteriorate due to polarity of solvent, hence causing some limitation on usable pigment. Also, because of increased volatility of ink, material of ink-tank and mechanism of the tip may place a limitation in their use for a ballpoint pen.

Alcohol-based solvent to be usable in the present invention is determined after studying on the compatibility with pigment and other ingredients of ink. Preferably designated as alcohol-based solvents are ethanol, 1-propanol, 2-propanol, 1-butanol, 2-butanol, t-butanol, etc., of which one or more than two in combination may be used.

To attain favorable writing touch and stable ink wettability on an impermeable surface, a surfactant may be added into the ink composition. While addition of surfactant improves writing performance on such an impermeable surface as plastics, if addition is less than 0.1 mass%, it is difficult to reduce surface tension of ink, and if addition is more than 3.0mass%, it excessively reduces surface tension of ink to cause possible smear of ink on a relatively wettable surface as glass. Therefore, dosage of surfactant should preferably be in the range of 0.1 through 3.0mass% against total quantity of ink composition.

In addition, one can use other surfactants generally used in ink composition for aqueous ballpoint pen, in a single kind or more than two kinds in combination, of such as phosphate ester compound, silicone compound, acetyleneglycol compound, etc. Specifically, it is preferable to add a phosphate ester type surfactant to provide rust-preventive effect also in case that metallic material is employed at the tip of a pen, or to add an acetyleneglycol type surfactant to improve water-resistance.

Further, for the purpose of preservation from decay of rust-preventive agent and aqueous ink, one can formulate an anti-mold preservative such as 1,2-benzo isothiazolin-3-on, etc, as required. Also for the purpose of attaining stable wettability of ink on an impermeable surface, one can formulate a wettability control agent such as water-soluble denatured silicone oil.

[Example]

Specific explanation of the present invention will be provided through several examples as set forth below.

Example 1

| Pigment Black 7 | 5.0 mass% |
| Water-soluble resin (Brand name; HPD-96) Acrylic-based resin | 4.0 mass% |
| Isopropyl alcohol (4.3kPa/20˚C) | 5.0 mass% |
| Water | 82.0 mass% |
| Anti-rust lubricant (Brand name; A-215C) | 0.5 mass% |
| Triethanolamine | 1.0 mass% |
| Oil-in-water type resin emulsion (Trade name; Johncryl 7001) acrylic emulsion | 1.5 mass% |
| Wettability improving agent (Trade name; Dynol 604) | 0.8 mass% |
| 1,2-benzoisothiazolin-3-on | 0.2 mass% |

Using Pigment Black 7 as coloring pigment, water as solvent, and acrylic resin of 16,500 molecular weight, 102˚C glass-transition temperature, and 240 acid value, which is HPD-96 in trade name by Johnson Polymer, Inc., as a water-soluble resin having pigment dispersing function as well as written mark fixation performance, those components were accurately weighed respectively in designated quantities, for subsequent processing by ball-mill to result in a uniformly dispersed pigment dispersion. Then, accurately weighing triethanolamine as pH control agent, Plysurf A-215C in trade name by Dai-ichi Kogyo Seiyaku Co., Ltd. which is a phosphate ester surfactant as antirust lubricant, Johncryl 7001 in trade name by Johnson Polymer, Inc., which is an acrylic-based emulsion having the lowest film-forming temperature of below 5˚C to be used as an enhancing agent for fixation and water resistance of written mark, Dynol 604 (trade name by Air Products Company)- acetyleneglycol-based surfactant to be used as wettability improving agent on impermeable surface, and 1,2-benzoylthiazolin-3-on to be used as an anti-fungus agent, in respectively designated quantities, such components were processed by Disper mixer at 50˚C of mixing temperature for an hour, the mixture thereof subsequently being gradually cooled down to be 30˚C of liquid temperature. Further, while mixing such uniformly mixed liquid by Disper mixer, isopropyl alcohol of 4.3kPa vapor pressure at 20˚C was gradually added in designated quantity, with mixing the liquid for further 20 minutes at 30˚C. Thus, aqueous ink for ballpoint pen was made, which was of black color in written mark as well as in appearance.

Regarding HPD-96 and Johncryl 7001, both being trade names, respectively effective solid contents were taken into account in setting the ink formulation. Also, viscosity of ink was adjusted to be 5.0mPa•s at 20˚C.

Example 2

Except that Pigment Green 7 of green-color pigment was used as coloring agent, and that Johncryl 775 (Johnson Polymer Company make) of styrene-acrylic type emulsion with the lowest film-forming temperature at 15˚C was used as written mark fixation and water resistance improving agent, as exhibited on Table 1, rest of the procedures followed those according to Example 1, resulting to obtain an ink of green color in written mark as well as appearance for aqueous ballpoint pen.

Regarding HPD-96 and Johncryl 775, respectively effective solid contents were taken into account in setting the ink formulation. Also, viscosity of ink was adjusted to be 10.0mPa•s at 20˚C.

Example 3

Except that Bonn coat 2610 (manufactured by Dainippon Ink Chemical Co., Ltd.) of vinyl acetate-based emulsion of which the lowest film formation temperature is equal to or less than 16˚C was used as written mark fixation and water resistance improving agent and that ethanol of 5.9kPa vapor pressure at 20˚C was used as alcoholic solvent, as indicated in Table 1, rest of the procedures followed those according to Example 1, resulting to acquire an ink of green color in written mark as well as appearance for aqueous ballpoint pen.

Regarding HPD-96 and Bonn coat 2610, respectively effective solid contents were taken into account in setting the ink formulation. Also, viscosity of ink was adjusted to be 15.0 mPa•s at 20˚C.

Example 4

Except that Pigment Red 170 of red color pigment was used as coloring agent, Johncryl 63 (manufactured by Johnson Polymer Corp.) of acrylic-based resin having 6,000 molecular weight, 73˚C glass transition temperature and 213 acid value was used as water-soluble resin with pigment dispersing function as well as written mark fixation performance and KF-618 (Shinetsu Chemical Industry Corp. make) of water-soluble denatured silicone oil was used as wettability improving agent on impermeable surface, as exhibited on Table 1, rest of the procedures followed those according to Example 1, resulting to obtain ink of red color in written mark as well as appearance for aqueous ballpoint pen.

Regarding Johncryl 63 and Johncryl 7001, respectively effective solid contents were taken into account in setting the ink formulation. Also, viscosity of ink was adjusted to be 20.0 mPa•s at 20˚C.

Example 5

Except that Arastar 703S (manufactured by Arakawa Chemical Industry Corp.) of styrene maleic acid resin was used as water-soluble resin, Nikkol TL-10 (manufactured by Nikko Chemicals Corp.) was used as dispersant, and KF-618 was used as wettability improving agent on impermeable surface, as exhibited on Table 2, rest of the procedures followed those according to Example 1, resulting to obtain ink of black color in written mark as well as appearance for aqueous ballpoint pen.

Regarding Arastar 703S and Johncryl 7001 (the trade names), respectively effective solid contents were taken into account in setting the ink formulation. Also, viscosity of ink was adjusted to be 25.0mPa•s at 20˚C.

Example 6

Except that isopropyl alcohol and ethanol were jointly used as solvent and KF-618 (the trade name) was used as wettability improving agent on impermeable surface, as exhibited on Table 2, rest of the procedures followed those according to Example 1, resulting to obtain ink of black color in written mark as well as appearance for aqueous ballpoint pen.

Regarding HPD-96 and Johncryl 7001 (the trade names), respectively effective solid contents were taken into account in setting the ink formulation. Also, viscosity of ink was adjusted to be 30.0mPa•s at 20˚C.

Example 7

Except that ethanol was used as solvent, and HPD-96 and Johncryl 63 (the trade names) were jointly used as water-soluble resins, as exhibited on Table 2, rest of the procedures followed those according to Example 1, resulting to obtain ink of black color in written mark as well as appearance for ballpoint pen.

Regarding HPD-96, Johncryl 63 and Johncryl 7001 (the trade names), respectively effective solid contents were taken into account in setting the ink formulation. Also, viscosity of ink was adjusted to be 15.0mPa•s at 20˚C.

Example 8

Except that ethanol was used as solvent, Johncryl 63 was used as water-soluble resin, and Johncryl 7001 and Voncoat 2610 were jointly used as resin emulsions, as exhibited on Table 2, rest of the procedures followed those according to Example 1, resulting to obtain ink of black color in written mark as well as appearance for ballpoint pen.

Regarding Johncryl 63, Johncryl 7001 and Voncoat 2610 (the trade names), respectively effective solid contents were taken into account in setting the ink formulation. Also, viscosity of ink was adjusted to be 10.0mPa•s at 20˚C.

[Table 1]

| Examples | | Example 1 | Example 2 | Example 3 | Example 4 |
|---|---|---|---|---|---|
| Coloring agents | Pigment Black 7 (Aqueous pigment) | 5.0 | | | |
| | Direct Black 154 (Aqueous dyestuff) | | 7.0 | 7.0 | |
| Dispersant | Nikkol TL-10 (Nonionic type surfactant) | | | | 7.0 |
| Solvents | Isopropyl Alcohol (Vapor pressure 4.3kPa) | 5.0 | 5.0 | | 5.0 |
| | Ethanol (Vapor pressure 4.3kPa) | | | 5.0 | |
| | Water | 82.0 | 62.5 | 57.5 | 73.1 |

(continued)

| Examples | | Example 1 | Example 2 | Example 3 | Example 4 |
|---|---|---|---|---|---|
| Anti-rust lubricant | Plysurf A-215C (Phosphate estersurfactant) | 0.5 | 0.5 | 0.5 | 0.5 |
| pH Control agent | Triethanolamine | 1.0 | 1.0 | 1.0 | 1.0 |
| Wettability control agents | Dynol 604 (Acetyleneglycol surfactant) | 0.8 | 0.8 | 0.8 | |
| | KF-618 (Silicone surfactant) | | | | 0.2 |
| Anti-fungus agent | 1,2-benzoisothiazolin-3-on | 0.2 | 0.2 | 0.2 | 0.2 |
| Water-soluble resins ① | HPD-96 (Acrylic resin) | 4.0 | 5.0 | 8.0 | |
| | Johncryl 63 (Acrylic resin) | | | | 12.0 |
| | Arastar 703S (Styrene-maleic resin) | | | | |
| Oil-in-water type resin emulsion ② | Johncryl 7001 (Acrylic emulsion) | 1.5 | | | 1.0 |
| | Johncryl 775 (Styrene-acrylic emulsion) | | 18.0 | | |
| | Voncoat 2610 (Vinylacetate emulsion) | | | 20 | |
| Concentration of resin solid content (①+②) | | 5.5 | 23.0 | 28.0 | 13.0 |
| viscosity of ink (mPa•s(20˚C)) | | 5 | 10 | 15 | 20 |
| Writing efficiency to impermeable surface | | ◎ | ◎ | ◎ | ○ |
| Dry scratch resistance on impermeable surface | | ◎ | ◎ | ◎ | ◎ |
| Wet scratch resistance on impermeable surface | | ◎ | ◎ | ◎ | ◎ |
| Drying characteristic of handwriting on impermeable surface | | ◎ | ◎ | ◎ | ◎ |
| Smear of handwriting on paper | | ○ | ○ | ◎ | ◎ |
| Dry efficiency of ink at the tip | | ◎ | ○ | ○ | ◎ |

[Table 2]

| Examples | | Example 5 | Example 6 | Example 7 | Example 8 |
|---|---|---|---|---|---|
| Coloring agents | Pigment Black 7 (Aqueous pigment) | 5.0 | 5.0 | 5.0 | 5.0 |
| | Pigment Green 7 (Aqueous pigment) | | | | |
| | Pigment Red 7 (Aqueous pigment) | | | | |
| Dispersant | Nikkol TL-10 (Nonionic type surfactant) | 3.0 | | | |
| Solvents | Isopropyl Alcohol (vapor pressure 4.3kPa) | 5.0 | 2.0 | | |
| | Ethanol (Vapor pressure 4.3kPa) | | 3.0 | 5.0 | 5.0 |
| | Water | 65.1 | 61.1 | 71.5 | 69.5 |

(continued)

| Examples | | Example 5 | Example 6 | Example 7 | Example 8 |
|---|---|---|---|---|---|
| Anti-rust lubricant | Plysurf A-215C (Phosphate estersurfactant) | 0.5 | 0.5 | 0.5 | 0.5 |
| pH Control agent | Triethanolamine | 1.0 | 1.0 | 1.0 | 1.0 |
| Wettability control agents | Dynol 604 (Acetyleneglycol surfactant) | | | 0.8 | 0.8 |
| | KF-618 (Silicone surfactant) | 0.2 | 0.2 | | |
| Anti-fungus agent | 1,2-benzoisothiazolin-3-on | 0.2 | 0.2 | 0.2 | 0.2 |
| Water-soluble resins ① | HPD-96 (Acrylic resin) | | 12.0 | 3.0 | |
| | Johncryl 63 (Acrylic resin) | | | 3.0 | 3.0 |
| | Arastar 703S (Styrene-maleic resin) | 10.0 | | | |
| Oil-in-water type resin emulsion ② | Johncryl 7001 (Acrylic emulsion) | 10.0 | 15.0 | 10.0 | 12.0 |
| | Johncryl 775 (Styrene-acrylic emulsion) | | | | |
| | Voncoat 2610 (Vinylacetate emulsion) | | | | 3 |
| Concentration of resin solid content (①+②) | | 20.0 | 27.0 | 16.0 | 18.0 |
| Viscosity of ink (mPa•s(20˚0)) | | 25 | 30 | 15 | 10 |
| writing efficiency to impermeable surface | | ○ | ○ | ◎ | ◎ |
| Dry scratch resistance on impermeable surface | | ◎ | ◎ | ◎ | ◎ |
| Wet scratch resistance on impermeable surface | | ◎ | ◎ | ◎ | ◎ |
| Drying characteristic of handwriting on impermeable surface | | ◎ | ◎ | ◎ | ◎ |
| Smear of handwriting on paper | | ◎ | ◎ | ◎ | ○ |
| Dry efficiency of ink at the tip | | ○ | ○ | ◎ | ○ |

Example 9

A ballpoint pen 1, as shown in Fig.1, is a direct filling ballpoint pen, wherein ink composition 7 as exhibited in Example 1 is directly filled in ink container-tube 2 being installed with tip of a ballpoint pen 3 made of stainless steel material and embracing freely rotatably a ball 4 at the head part of ink container-tube 2, the tail part of which is plugged with a tail cap 6.

Also, within an ink container-tube 2, an ink follower-piece 8 is placed being directly attached to ink surface inside the tail part of tube, opposite from tip 3 of the ballpoint pen (i.e., on the side of tail cap 6) so that the ink follower-piece follows as ink consumes.

While shape or structure of the tip of a ballpoint pen 3 is not limited to the above examples, it is preferable to be provided with valve mechanism, which works for successfully preventing ink leakage. At the tip 3 of the ballpoint pen, a free-rotatable ball 4 encased and held therein is pressed to inner wall of the tip-edge directly by coil-spring 5 or through a pusher-article (not shown in the drawing) pressing rear face of the ball, to hold ink flow while not in use, and to allow ink flow through the gap between inner wall of the tip-edge and surface of a ball, while in use for writing with pressure.

Also, regarding material for a ball 4 used by the present invention, a ultra-hard metal ball of such as tungsten carbide, a ceramic ball of such as silica, alumina, zirconia, silicon carbide, etc. may be designated. However, in light of the ball-rotation on an impermeable surface of such as metal, glass or plastic material, as stated above, low rotation-resistance between ball surface and coordinate plane of a ball is preferred. Hence, recommended for use is a mirror-finish ball or a ceramic ball of low roll-resistance, or of less than 5 nm of arithmetic average value of surface roughness (Ra). As indicated in the mathematical 1, arithmetic average value of surface roughness (Ra) is average number computed from the sum of absolute value of deviation from average line, which is obtained from the curve of roughness measured by a needle-touching gauge type roughness measuring machine (the Form-Talysurf SIF-50 manufactured by Taylor Hobson Company) by extracting standard length "L" in the direction of the average line, to the measured curve.

[Formula 1]

$$Ra = 1/L * \int_0^1 |f(x)|$$

Comparison Examples 1 through 8

Except that ink compositions followed Table 3, Table 4 and Table 5, ink for an aqueous ballpoint pen was made according to Example 1.

[Table 3]

| Comparison Example | | Comparison Example 1 | Comparison Example 2 | Comparison Example 3 |
|---|---|---|---|---|
| Coloring agents | Pigment Black 7 (Aqueous pigment) | | 5.0 | 5.0 |
| | Pigment Green 7 (Aqueous pigment) | 5.0 | | |
| Dispersant | Nikkol TL-10 (Nonionic type surfactant) | | | |
| Solvents | Isopropyl Alcohol (Vapor pressure 4.3kPa) | 5.0 | | 5.0 |
| | Ethyleneglycol (Vapor pressure 0.0003 kPa) | | 5.0 | 3.0 |
| | Water | 71.5 | 71.5 | 68.5 |
| Anti-rust lubricant | Plysurf A-215C (Phosphate estersurfactant) | 0.5 | 0.5 | 0.5 |
| pH Control agent | Triethanolamine | 1.0 | 1.0 | 1.0 |
| Wettability control agents | Dynol 604 (Acetyleneglycol surfactant) | 0.8 | 0.8 | 0.8 |
| Anti-fungus agent | 1,2-benzoisothiazolin-3-on | 0.2 | 0.2 | 0.2 |
| Water-soluble resins ① | HPD-96 (Acrylic resin) | 6.0 | 6.0 | 6.0 |
| Oil-in-water type resin emulsion ② | Johncryl 7001 (Acrylic emulsion) | 10.0 | 10.0 | 10.0 |
| Concentration of resin solid content | | 16.0 | 16.0 | 16.0 |
| Viscosity of ink (mPa•s (20˚C)) | | 10 | 10 | 10 |
| Writing efficiency to impermeable surface | | ◎ | ◎ | ◎ |

(continued)

| Comparison Example | Comparison Example 1 | Comparison Example 2 | Comparison Example 3 |
|---|---|---|---|
| Dry scratch resistance on impermeable surface | - | × | × |
| Wet scratch resistance on impermeable surface | - | × | × |
| Drying characteristic of handwriting on impermeable surface | - | × | × |
| Smear of handwriting on paper | × | × | × |
| Dry efficiency of ink at the tip | × | ◎ | ◎ |

[Table 4]

| Comparison Example | | Comparison Example 4 | Comparison Example 5 | Comparison Example 6 |
|---|---|---|---|---|
| Coloring agents | Pigment Black 7 (Aqueous pigment) | 5.0 | 5.0 | 5.0 |
| | Pigment Green 7 (Aqueous pigment) | | | |
| Dispersant | Nikkol TL-10 (Nonionic type surfactant) | | | |
| Solvents | Isopropyl Alcohol (Vapor pressure 4.3kPa) | 5.0 | 5.0 | 5.0 |
| | Ethyleneglycol (Vapor pressure 0.0003 kPa) | | | |
| | Water | 80.5 | 62.5 | 83.5 |
| Anti-rust lubricant | Plysurf A-215C (Phosphate estersurfactant) | 0.5 | 0.5 | 0.5 |
| pH Control agent | Triethanolamine | 1.0 | 1.0 | 1.0 |
| Wettability control agents | Dynol 604 (Acetyleneglycol surfactant) | 0.8 | 0.8 | 0.8 |
| Anti-fungus agent | 1,2-benzoisothiazolin-3-on | 0.2 | 0.2 | 0.2 |
| Water-soluble resins ① | HPD-96 (Acrylic resin) | 2.0 | 15.0 | 3.0 |
| Oil-in-water type resin emulsion ② | Johncryl 7001 (Acrylic emulsion) | 5.0 | 10.0 | 1.0 |
| Concentration of resin solid content (①+②) | | 7.0 | 25.0 | 4.0 |
| Viscosity of ink (mPa•s(20˚C)) | | 3 | 35 | 3 |

(continued)

| Comparison Example | Comparison Example 4 | Comparison Example 5 | Comparison Example 6 |
|---|---|---|---|
| Writing efficiency to impermeable surface | ◎ | × | ◎ |
| Dry scratch resistance on impermeable surface | × | - | × |
| Wet scratch resistance on impermeable surface | × | - | × |
| Drying characteristic of handwriting on impermeable surface | × | - | × |
| Smear of handwriting on paper | × | ◎ | × |
| Dry efficiency of ink at the tip | ◎ | × | ◎ |

[Table 5]

| Comparison Example | | Comparison Example 7 | Comparison Example 8 | Comparison Example 9 |
|---|---|---|---|---|
| Coloring agents | Pigment Black 7 (Aqueous pigment) | 5.0 | 5.0 | 5.0 |
| | Pigment Green 7 (Aqueous pigment) | | | |
| Dispersant | Nikkol TL-10 (Nonionic type surfactant) | | | 3.0 |
| Solvents | Isopropyl Alcohol (Vapor pressure 4.3kPa) | 5.0 | 5.0 | 5.0 |
| | Ethyleneglycol (Vapor pressure 0.0003 kPa) | | | |
| | Water | 52.5 | 77.5 | 64.5 |
| Anti-rust lubricant | Plysurf A-215C (Phosphate estersurfactant) | 0.5 | 0.5 | 0.5 |
| pH Control agent | Triethanolamine | 1.0 | 1.0 | 1.0 |
| Wettability control agents | Dynol 604 (Acetyleneglycol surfactant) | 0.8 | 0.8 | 0.8 |
| Anti-fungus agent | 1,2-benzoisothiazolin-3-on | 0.2 | 0.2 | 0.2 |
| Water-soluble resins ① | HPD-96 (Acrylic resin) | 5.0 | 10.0 | |
| Oil-in-water type resin emulsion ② | Johncryl 7001 (Acrylic emulsion) | 30.0 | | 20.0 |
| Concentration of resin solid content (①+②) | | 35.0 | 10.0 | 20.0 |

(continued)

| Comparison Example | Comparison Example 7 | Comparison Example 8 | Comparison Example 9 |
|---|---|---|---|
| Viscosity of ink (mPa•s(20˚C)) | 40 | 15 | 3 |
| Writing efficiency to impermeable surface | × | ◎ | ◎ |
| Dry scratch resistance on impermeable surface | - | ○ | × |
| Wet scratch resistance on impermeable surface | - | × | × |
| Drying characteristic of handwriting on impermeable surface | - | O | × |
| Smear of handwriting on paper | ◎ | ◎ | × |
| Dry efficiency of ink at the tip | × | ◎ | ○ |

Test Method and Evaluation

Inks for an aqueous ballpoint pen made according to Examples 1 through 8 and Comparison Examples 1 through 9 were respectively evaluated, and further filled in ink container-tube 2 of Example 9 directly, resulting to fabricate an aqueous ballpoint pen 1, which was tested and evaluated as follows:

(1) Writability Performance on Impermeable Surface

Upon writing on untreated glass surface, inspection results are indicated with symbols as follows:

◎··· Excellent ink flow and written mark
○ ... Fairly satisfactory writing
Δ ··· Able to write but with some defect
× ··· Unable to write

(2) Dry Scratch Resistance on an Impermeable Surface

1 gram of ink was dropped on a PET film and squeezed to form 10 $\mu$m-thick film and left for 10minutes at 23$\pm$2˚C in testing environment of 50$\pm$5%RH humidity. Then, using dry cotton cloth, scratching under 100gf/cm$^2$load was applied 10 times and appearance of resultant dry ink film was observed for rating as follows:

◎ ··· No scratch and no peeling
○ ··· Slight damage on ink film
Δ ··· Some visible damage on ink film
× ··· More than half of film was damaged

(3) Wet Scratch Resistance on an Impermeable Surface

1 gram of ink was dropped on a PET film and squeezed to form 10 $\mu$m-thick film and left for 24hours at 23$\pm$2˚C in testing environment of 50$\pm$5%RH humidity. Then, using wet cotton cloth which had been soaked in deionized water, scratching under 100gf/cm$^2$ load was applied 10 times and appearance of resultant dry ink film was observed for rating as follows:

◎ ... No scratch and no peeling
○ ... Slight damage on ink film
Δ ··· Some visible damage on ink film
× ... More than half of film was damaged

(4) Written Mark Drying Property

1 gram of ink was dropped on a PET film and squeezed to form 10 $\mu$m-thick film. Appearance of ink film was observed at 23$\pm$2˚C in testing environment of 50$\pm$5%RH humidity.

◎ ··· Ink film completely dries within 20seconds.
○ ··· Ink film completely dries in 20 to 30seconds.
△··· Ink film completely dries in 40 to 50seconds.
✕ ··· Takes more than 60seconds for ink film to dry.

(5) Written Mark Smear on Paper

In testing environment of 50$\pm$5%RH humidity at 23$\pm$2˚C, straight line was written with 100gf load at writing speed of 4m/min on writing paper A (JIS(Japan Industrial standard) P3201), and smearing of written mark was observed.

◎ ... Excellent written mark with no smear at all.
O ··· Practically acceptable written mark
△ ··· Moderate smear
✕ ··· Significant smear, not acceptable

(6) Ink Dry-up Behavior at Tip Part

With cap taken off, after test pen was left for 24hours at 23˚C in 50%RH humidity environment, straight line was written with 100 gf load on writing paper A (JIS P3201 and the initial stage writing condition thereof was observed.

◎ ··· Excellent mark appears within 2 cm of initial run.
○ ··· Excellent mark appears after 2 to 4 cm of initial run.
△ ··· Excellent mark appears after 5 to 7 cm of initial run.
✕ ··· Mark does not look good for more than 7 cm of initial run.

Comparison Example 1 employed aqueous dyestuff as coloring agent. At the tip part of pen, dry-up of ink promptly advanced into inner part so that no satisfactory writing performance on an impermeable surface was acquired. Therefore, this was omitted out from evaluation.
Comparison Example 2 employed, as solvent, water and ethylene glycol of 7.0 x $10^{-4}$ kPa vapor pressure at 20˚C, and Comparison Example 3 employed, in combination, water, ethylene glycol of 7.0 x $10^{-4}$kPa vapor pressure at 20˚C and isopropyl alcohol of 4.3kPa vapor pressure at 20˚C. Written mark dry-up property, written mark scratch resistance and written mark smear on paper were inferior, because clearly obvious characteristics of ethylene glycol appeared.
Comparison Example 4 was a case, where ink viscosity was excessively low, being 3mPa. While it was possible to write on an impermeable surface, smear of written mark on paper was excessive due to the low viscosity. The low viscosity of ink also caused an excessive flow of ink and unsatisfactory ink control at the tip part, resulting in unsatisfactory dry-up property and scratch resistance of written mark.
Comparison Example 5 was a case, where ink viscosity was excessively high, being 35mPa•s. Writing on an impermeable surface was not satisfactory due to high viscosity. Thus, this was omitted out from evaluation.
Comparison Example 6 was a case, where concentration of resin solid content was excessively low, being 4.0 %. The low solid content resulted in unsatisfactorily low viscosity of ink, likewise in Comparison Example 4. Thus, performance result was similar with the case of Comparison Example 4.
Comparison Example 7 was a case, where concentration of resin solid content was excessively high, being 35.0%. The high concentration of solid content resulted in unsatisfactorily high viscosity of ink, likewise in Comparison Example 5.
Comparison Example 8 was a case, where an oil-in-water type resin emulsion was not employed. Because water resistance of written mark was poor, it resulted in poor wet scratch resistance.
Comparison Example 9 was a case, where water-soluble resin was not employed. Since ink viscosity was excessively low, likewise in Comparison Example 4, resultant characteristics were quite similar with those of Comparison Example 4.
Ink of the present invention can be used for writing on both of permeable and impermeable surfaces, hence allowing a ballpoint pen therewith in extensive applications.

## Claims

1. Ink for aqueous ballpoint pen, using an oil-in-water type resin emulsion, comprising:

   a solvent of water and alcohol-based solvent of 0.5 to 10 kPa in vapor pressure at 20˚C;
   a pigment;
   a water-soluble resin; and,
   an oil-in-water type resin emulsion,
   wherein an aggregate concentration of solid contents of said water-soluble resin and said oil-in-water type resin emulsion is 5.0 to 30.0 mass% against total quantity of the ink composition, and
   wherein viscosity of the ink falls within the range of 5 to 30mPa•s at 20˚C,
   wherein the oil-in-water type resin emulsion is 1.0 to 20.0 mass% in terms of solid content against the total quantity of the ink composition, and
   wherein the water-soluble resin is in the range of 1.0 to 20.0 mass% against the total quantity of the ink composition.

2. The ink for aqueous ballpoint pen, using an oil-in-water type resin emulsion, according to Claim 1, wherein the oil-in-water type resin emulsion is an acrylic-based emulsion.

3. The ink for aqueous ballpoint pen, using the oil-in-water type resin emulsion, according to Claim 2, wherein a lowest film-forming temperature of the acrylic-based emulsion is equal to or below 25˚C.

4. The ink for aqueous ball point pen, using the oil-in-water type resin emulsion, according to any one of Claims 1-3, wherein the water-soluble resin is an acrylic-based resin.

5. The ink for aqueous ballpoint pen, using the oil-in-water type resin emulsion, according to Claim 4 wherein the acrylic-based resin is 5,000 through 20,000 in molecular weight, 40 through 150˚C in glass-transition temperature and 50 through 250 in acid value.

6. An aqueous ballpoint pen, using oil-in-water type resin emulsion, and including an ink-container tube having an end thereof to which a tip of ballpoint pen freely rotatably holding a ball is directly or through a tip-holder connected, wherein an aqueous ink for ballpoint pen using the oil-in-water type resin emulsion according to any one of Claims 1-5, is filled in the ink-container tube.

7. The aqueous ballpoint pen, using the oil-in-water type resin emulsion, according to Claim 6, wherein the ballpoint pen comprises a valve mechanism which, when said pen is not in use, allows the ball rotatably held in the tip of the ballpoint pen, to be pressed against an inner wall of an edge of said tip due to a coil spring abutted directly or through a pusher-article against a rear face of said ball and, when said pen is in use, allows the ink to flow through a gap provided between the inner wall of the edge of said tip and the ball for writing with pressure, by valve mechanism.

8. The aqueous ballpoint pen, using an oil-in-water type resin emulsion, according to either Claim 6 or Claim 7, wherein the tip of the ballpoint pen is made of stainless steel substance and a surface roughness of said ball is equal to or less than 5 nm in terms of arithmetic average value of a surface roughness (Ra).

9. A method for forming an ink as defined in any one of claims 1 to 5, the method comprising mixing:

   the solvent of water and alcohol-based solvent;
   the pigment;
   the water-soluble resin; and
   the oil-in-water type resin emulsion.

## Patentansprüche

1. Tinte für einen Kugelschreiber auf wässriger Basis, welche eine Harz-Emulsion vom ÖI-in-Wasser-Typ verwendet, umfassend:

   ein Lösungsmittel aus Wasser und einem Alkohol-basierenden Lösungsmittel mit einem Dampfdruck von 0,5 bis 10 kPa bei 20˚C;
ein Pigment;
ein Wasser-lösliches Harz; und
eine Harz-Emulsion vom Öl-in-Wasser-Typ,
wobei eine Aggregatskonzentration von Feststoffgehalten von dem Wasser-löslichen Harz und der Harz-Emulsion vom ÖI-in-Wasser-Typ 5,0 bis 30,0 Massen% gegenüber der Gesamtmenge der Tintenzusammensetzung beträgt, und
wobei die Viskosität der Tinte in den Bereich von 5 bis 30 mPa·s bei 20˚ C fällt,
wobei die Harz-Emulsion vom Öl-in-Wasser-Typ 1,0 bis 20,0 Massen% bezüglich des Feststoffgehalts gegenüber der Gesamtmenge der Tintenzusammensetzung beträgt, und
wobei das Wasser-lösliche Harz gegenüber der Gesamtmenge der Tintenzusammensetzung in dem Bereich von 1,0 bis 20,0 Massen% liegt.

2. Tinte für einen Kugelschreiber auf wässriger Basis, welche eine Harz-Emulsion vom Öl-in-Wasser-Typ verwendet, gemäß Anspruch 1, wobei die Harz-Emulsion vom Öl-in-Wasser-Typ eine Acryl-basierende Emulsion ist.

3. Tinte für einen Kugelschreiber auf wässriger Basis, welche eine Harz-Emulsion vom ÖI-in-Wasser-Typ verwendet, gemäß Anspruch 2, wobei die niedrigste Filmbildungstemperatur der Acryl-basierenden Emulsion gleich oder kleiner als 25˚C ist.

4. Tinte für einen Kugelschreiber auf wässriger Basis, welche eine Harz-Emulsion vom Öl-in-Wasser-Typ verwendet, gemäß einem der Ansprüche 1-3, wobei das Wasser-lösliche Harz ein Acryl-basierendes Harz ist.

5. Tinte für einen Kugelschreiber auf wässriger Basis, welche eine Harz-Emulsion vom Öl-in-Wasser-Typ verwendet, gemäß Anspruch 4, wobei das Acryl-basierende Harz ein Molekulargewicht von 5000 bis 20.000, eine Glas-Übergangstemperatur von 40 bis 150˚C und einen Säurewert von 50 bis 250 aufweist.

6. Kugelschreiber auf wässriger Basis, welcher eine Harz-Emulsion vom ÖI-in-Wasser-Typ verwendet und ein Tintenaufnahmerohr umfasst, dessen eines Ende direkt oder durch eine Spitzenhalterung mit einer Kugelschreiberspitze verbunden ist, welche frei drehbar eine Kugel hält, wobei eine wässrige Tinte für den Kugelschreiber, welche die Harz-Emulsionen vom Öl-in-Wasser-Typ gemäß einem der Ansprüche 1-5 verwendet, in das Tintenaufnahmerohr eingefüllt ist.

7. Kugelschreiber auf wässriger Basis, welcher eine Harz-Emulsion vom Öl-in-Wasser-Typ verwendet, gemäß Anspruch 6, wobei der Kugelschreiber einen Ventilmechanismus umfasst, welcher dann, wenn der Schreiber nicht verwendet wird, erlaubt, dass die in der Spitze des Kugelschreibers drehbar gehaltene Kugel gegen eine Innenwand von einem Rand der Spitze gepresst wird, durch eine Schraubenfeder, welche direkt oder durch einen Druckgegenstand an einer hinteren Fläche der Kugel anliegt, und dann, wenn der Schreiber im Gebrauch ist, durch den Ventilmechanismus erlaubt, dass die Tinte durch einen Spalt fließt, welcher zwischen der inneren Wand von dem Rand der Spitze und der Kugel vorgesehen ist, um unter Druck zu schreiben.

8. Kugelschreiber auf wässriger Basis, welcher eine Harz-Emulsion vom Öl-in-Wasser-Typ verwendet, gemäß Anspruch 6 oder Anspruch 7, wobei die Spitze des Kugelschreibers aus einer rostfreien Stahl-Substanz hergestellt ist und wobei eine Oberflächenrauigkeit der Kugel gleich oder kleiner als 5 nm bezüglich des arithmetischen Mittelwerts einer Oberflächenrauigkeit (Ra) ist.

9. Verfahren zur Bildung einer in einem der Ansprüche 1-5 definierten Tinte, wobei das Verfahren das Mischen umfasst von:

dem Lösungsmittel aus Wasser und Alkohol-basierendem Lösungsmittel;
dem Pigment;
dem Wasser-löslichen Harz; und
der Harz-Emulsion vom Öl-in-Wasser-Typ.

**Revendications**

1. Encre pour stylo à bille à encre aqueuse, comportant une émulsion de résine du type huile dans l'eau, comprenant :

un solvant constitué d'eau et d'un solvant alcoolique ayant une pression de vapeur de 0,5 à 10 kPa à 20˚C ;
un pigment ;
une résine hydrosoluble ; et
une émulsion de résine du type huile dans l'eau,
dans laquelle la concentration globale de matière sèche de ladite résine hydrosoluble et de ladite émulsion de résine du type huile dans l'eau est de 5,0 à 30,0 % en masse par rapport à la quantité totale de la composition d'encre, et
dans laquelle la viscosité de l'encre s'inscrit dans l'intervalle de 5 à 30 mPa.s à 20˚C,
dans laquelle l'émulsion de résine du type huile dans l'eau représente 1,0 à 20,0 % en masse de matière sèche par rapport à la quantité totale de la composition d'encre, et
dans laquelle la teneur en résine hydrosoluble se situe dans l'intervalle de 1,0 à 20,0 % en masse par rapport à la quantité totale de la composition d'encre.

2. Encre pour stylo à bille à encre aqueuse, comportant une émulsion de résine du type huile dans l'eau, selon la revendication 1, dans laquelle l'émulsion de résine du type huile dans l'eau est une émulsion à base acrylique.

3. Encre pour stylo à bille à encre aqueuse, comportant l'émulsion de résine du type huile dans l'eau, selon la revendication 2, dans laquelle la plus basse température de formation de film de l'émulsion à base acrylique est égale ou inférieure à 25˚C.

4. Encre pour stylo à bille à encre aqueuse, comportant l'émulsion du type huile dans l'eau, selon l'une quelconque des revendications 1 à 3, dans laquelle la résine hydrosoluble est une résine à base acrylique.

5. Encre pour stylo à bille à encre aqueuse, comportant l'émulsion de résine du type huile dans l'eau, selon la revendication 4, dans laquelle la résine à base acrylique a un poids moléculaire de 5000 à 20 000, une température de transition vitreuse de 40 à 150˚C et un indice d'acide de 50 à 250.

6. Stylo à bille à encre aqueuse, utilisant une émulsion du type huile dans l'eau, et comprenant un récipient à encre tubulaire à une extrémité duquel la pointe d'un stylo à bille retenant une bille en rotation libre est reliée directement ou au moyen d'un porte-pointe, dans lequel le récipient à encre tubulaire est rempli d'une encre aqueuse pour stylo à bille comportant l'émulsion de résine du type huile dans l'eau selon l'une quelconque des revendications 1 à 5.

7. Stylo à bille à encre aqueuse, utilisant l'émulsion de résine du type huile dans l'eau, selon la revendication 6, dans lequel le stylo à bille comprend un mécanisme de clapet qui, lorsque ledit stylo n'est pas en service, permet de presser la bille retenue en rotation libre dans la pointe du stylo à bille contre une paroi interne d'un bord de ladite pointe par l'action d'un ressort hélicoïdal qui appuie directement ou par l'intermédiaire d'un élément pousseur sur la face arrière de ladite bille et, lorsque ledit stylo est en service, permet à l'encre de s'écouler à travers un espace ménagé par le mécanisme de clapet entre la paroi interne du bord de ladite pointe et la bille pour effectuer une écriture sous pression.

8. Stylo à bille à encre aqueuse, utilisant une émulsion de résine du type huile dans l'eau, selon l'une ou l'autre de la revendication 6 ou de la revendication 7, dans lequel la pointe du stylo à bille est constituée d'acier inoxydable et la rugosité superficielle de ladite bille est égale ou inférieure à 5 nm, exprimée en valeur moyenne arithmétique de rugosité superficielle (Ra).

9. Procédé de préparation d'une encre telle que définie dans l'une quelconque des revendications 1 à 5, le procédé comprenant l'opération consistant à mélanger :

le solvant constitué d'eau et de solvant alcoolique;
le pigment;
la résine hydrosoluble ; et
l'émulsion de résine du type huile dans l'eau.

EP 1 591 499 B1

FIG. 1

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003291579 A
- JP 2002036775 A
- JP 2002226760 A